Europäisches Patentamt

European Patent Office — Publication number: **0 402 660**

Office européen des brevets — **A1**

## EUROPEAN PATENT APPLICATION

(21) Application number: **90109543.0**

(22) Date of filing: **19.05.90**

(51) Int. Cl.⁵: **F16D 65/22, F16D 51/20**

(30) Priority: **23.05.89 JP 127755/89**

(43) Date of publication of application:
**19.12.90 Bulletin 90/51**

(84) Designated Contracting States:
**DE ES GB**

(71) Applicant: **AKEBONO BRAKE INDUSTRY CO., LTD.**
**19-5, Nihonbashi Koami-cho**
**Chuo-ku Tokyo 103(JP)**

(72) Inventor: **Ikegami, Hiroshi**
**1-15-73-423, Chuo**
**Kuki-shi, Saitama(JP)**

(74) Representative: **Henkel, Feiler, Hänzel & Partner**
**Möhlstrasse 37**
**D-8000 München 80(DE)**

(54) **Parking cable connector for drum brakes.**

(57) A one-piece parking cable connector (16) for drum brakes that is simple to assemble and minimizes the required parts control, the parking brake connector comprising a flange portion (17), having a cable through hole for inserting a parking cable, being of a size large enough to abut against the periphery of a connector through hole (12) provided in the backing plate (1) of the drum brake, and a guide portion (20) formed integrally with the flange portion (17), the guide portion (20) being of a size large enough to be passable through the connector through hole (12) and being capable of changing the direction of the parking cable once it has passed through the connector through hole (12) in the backing plate (1).

FIG. 2

EP 0 402 660 A1

# PARKING CABLE CONNECTOR FOR DRUM BRAKES

## BACKGROUND OF THE INVENTION

### Field of Invention

The present invention relates to a drum brake parking cable connector. More particularly, the present invention relates to one piece parking cable connector which is easily fitted onto the brake drum and which is capable of guiding a parking brake cable into contact and operational alignment with a parking brake lever within the drum brake.

### Description of Related Art

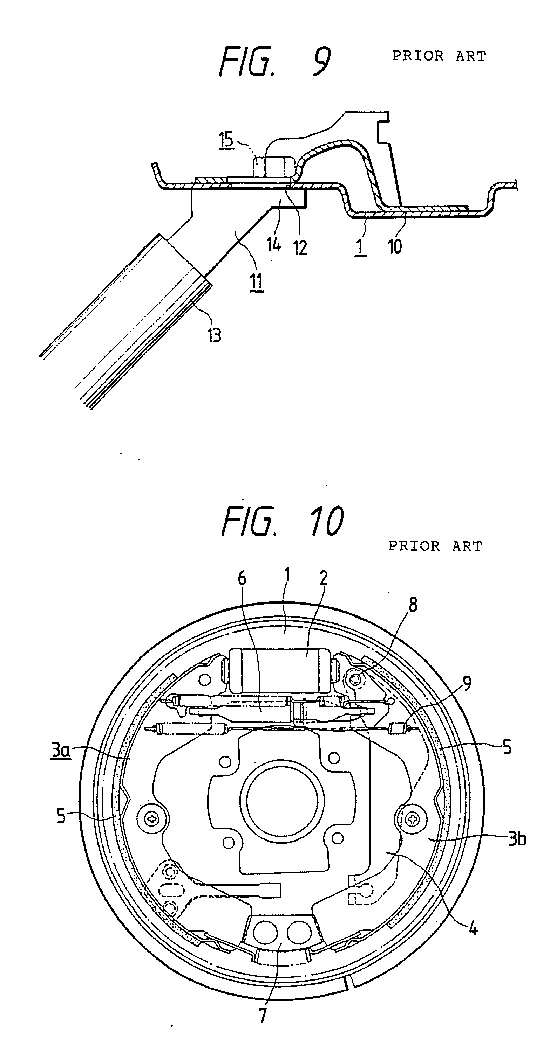

In the automobile braking art there exist many devices for accomplishing this difficult task. Many of the known braking devices incorporate a drum brake arrangement in accomplishing this task. FIGURE 10 (Prior Art) depicts an example of a drum brake which has been known for use in braking cars.

As shown in FIGURE 10 (Prior Art), the known drum brake comprises: a brake drum (not shown) that rotates along with wheel; a backing plate 1 fixed to a suspension system; a pair of brake shoes 3a and 3b, displaceable in a radially outward direction, and supported at one end by a wheel cylinder 2 and at the other end by an anchor 7. The pair of brake shoes are capable of being displaced towards the inner peripheral surface of the brake drum by an expansion of the wheel cylinder 2, which is fixed to the backing plate 1. A parking lever 4 is provided with one end (upper end as viewed in FIGURE 10) being pivotally connected to a pivot pin 8 on one brake shoe 3b (right shoe as viewed in FIGURE 10), and the other end being (lower end as viewed in FIGURE 10) connected to a parking brake cable (not shown). A strut 6 is provided having one end (right end) abutting against the middle of the parking lever 4 and having the other end (left end as viewed in FIGURE 10) abutting against the other brake shoe 3a (left as viewed in FIGURE 10).

To effect braking by the drum brake thus constructed, the distance between the ends (upper end as viewed in FIGURE 10) of the pair of brake shoes 3a, 3b is increased by expanding the wheel cylinder 2; this causes both of the brake shoes 3a, 3b to be displaced toward the outside of the backing plate 1 while turning around an anchor 7 fixed on the backing plate 1. The outer peripheral surfaces of the linings 5, 5 of the respective brake shoes 3a, 3b are pressed onto the inner peripheral surface of the brake drum thereby causing a braking force to be produced as the result of friction between these two surfaces. To effect a release of the braking force, the supply of hydraulic oil to the wheel cylinder 2 is interrupted and a return spring 9 causes the brake shoes 3a and 3b to return to their original position thereby disengaging the outer peripheral surfaces of the linings 5, 5 from the inner peripheral surface of the brake drum.

When operating the drum brake as a parking brake, the other end (lower end as viewed in FIGURE 10) of the parking lever 4 is pulled toward the left as viewed in FIGURE 10 by the parking brake cable. This causes the lever 4 to turn around the pivot pin 8 in a clockwise direction as viewed in the same figure. As a result, the strut, one end of which is abutting against the middle of the parking lever 4, is pushed left as viewed in FIGURE 10, and the brake shoe 3a, against which the other end of the strut 6 is abutted, is urged left (as viewed in FIGURE 10), thereby causing the outer peripheral surface of the lining 5 of the brake shoe 3a to come into contact with the inner peripheral surface of the brake drum.

At the same time, as a reaction, the pivot pin 8 connecting the parking lever 4 to the brake show 3b is displaced to the right, the brake shoe 3b on the right side as viewed in FIGURE 10 on which the pivot pin 8 is arranged is urged right (as viewed in FIGURE 10), causing the outer peripheral surface of the lining 5 of the brake shoe 3b to come into contact with on the inner peripheral surface of the brake drum.

As a result, the outer peripheral surfaces of the linings 5, 5 of both brake shoes 3a, 3b are pressed onto the inner peripheral surface of the brake drum, thereby producing a frictional braking force between both peripheral surfaces. In order to operate the drum brake thus constructed as a parking brake, it is a requirement that the parking cable, one end of which is connected to the other end of the parking lever 4, be guided out of the backing plate 1 using a parking cable connector through hole arranged on the backing plate 1.

Towards this end, the known drum brake includes a structure to guide the parking cable out of the backing plate 1. This structure is illustrated in FIGURE 9 (Prior Art).

In FIGURE 9 (Prior Art), reference numeral 10 designates a cable guide that is prepared by press working a metal plate into a desired shape and securing it beside the backing plate,s parking brake connector through hole 12 by welding. Reference numeral 11 designates a connector having a flange portion 14 on one end, with one face of the flange portion 14 abutting against the periphery of the connector through hole 12. Reference numeral 13 designates a guide tube, through which the parking cable can pass, with the guide tube being integrally formed with the connector. One opening of the guide tube 13 is aligned with the connector through hole 12. The connector 11 is secured to the backing plate 1 by a screw 15.

As a result of this construction, in order to guide the parking cable into operational alignment with the parking lever 4 to which it is to be connected, the cable must be guided through the backing plate 1 and then guided into operational alignment with the parking lever 4. This second guiding operation requires that the parking cable undergo a direction change once it has passed through the backing plate 1. However, to accomplish both tasks, the conventional designs require not only that the cable guide 10 be welded to the backing plate 1, but also that the connector 11 must be screwed into the backing plate 1. As a result, drum brake assembly work and the parts control are unnecessarily complicated.

## SUMMARY OF THE INVENTION

One object of the present invention is to provide a parking cable connector for drum brakes that is simple to assemble and minimizes the required parts control. The parking cable connector being provided for a drum brake assembly having a backing plate includes a flange portion having a cable through hole for inserting a parking cable, the flange portion being of a size large enough to abut against a periphery of a connector through hole provided in the backing plate; and a guide portion integrally formed with the flange portion, the guide portion being of a size large enough to be passable through the connector through hole and being capable of changing the direction of the parking cable once it has passed through the connector through hole.

As the result of its unique design, the parking cable connector for drum brakes according to the present invention requires only a single component that can be simply fitted to the backing plate. It is through this design that the assembly operation can be simplified and parts control requirements reduced.

Other objects, features, and characteristics of the present invention, as well as the methods in operation and functions of the related elements of the structure and combination of parts and economies of manufacture, will become apparent upon consideration of the following description and appended claims with reference to the accompanying drawings, all of which form a part of this specification.

## BRIEF DESCRIPTION OF THE DRAWINGS

FIGURE 1 is a plan view of a parking cable connector according to the present invention;

FIGURE 2 is a sectional view taken along line A-A of FIGURE 1;

FIGURE 3 is a bottom view of a parking cable connector according to the present invention;

FIGURE 4 is a diagram of a guide portion as viewed from the right in FIGURE 2;

FIGURES 5 through 8 are side views of a parking cable connector according to the present invention, each showing the process of passing the connector through the connector through hole provided in the backing plate, one step at a time;

FIGURE 9 (Prior Art) is a sectional view showing the internal structure of a known parking cable guide; and

FIGURE 10 (Prior Art) is a front view showing an example of a known drum brake device.

## DETAILED DESCRIPTION OF THE PREFERRED EMBODIMENT

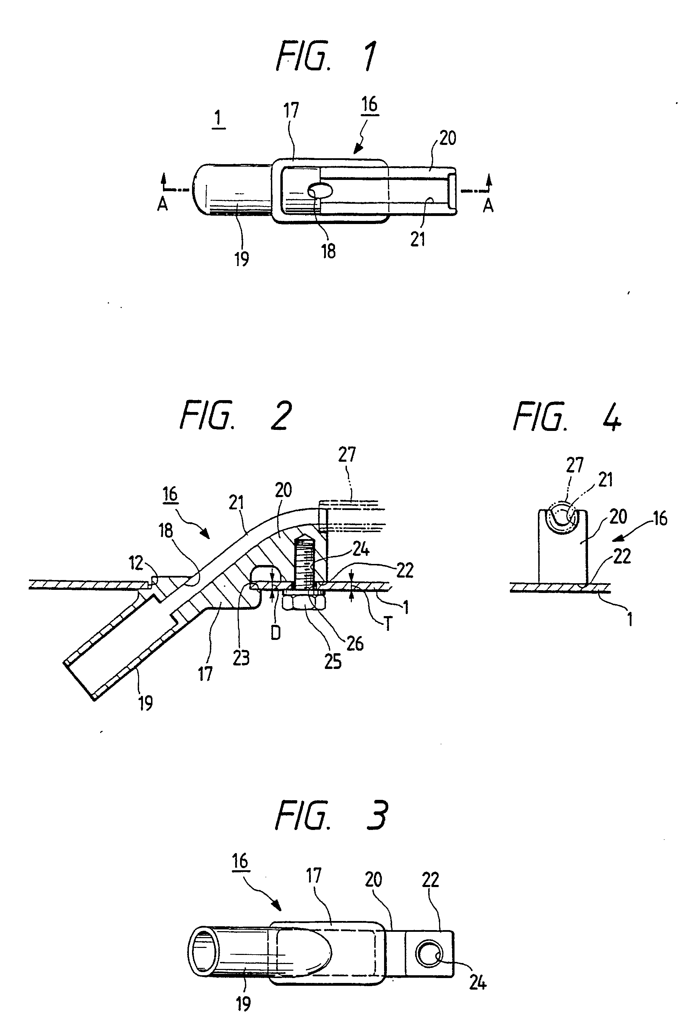

The presently preferred embodiment of parking cable connector for drum brakes according to the present invention is referred to in FIGURES 1-8 as numeral 16. This connector may be composed of a metal such as aluminum, one-piece stainless steel, or a synthetic resin such as nylon. The material is not to be limited to the above, but may be made of any suitable material.

The connector 16 includes a flange portion 17. As is best illustrated in FIGURE 4, the dimensions and shape of the flange portion are such that the flange portion abuts against the periphery of a connector through hole 12 provided in the backing plate 1 of the drum brake. This connector through hole allows the parking cable to be inserted into the drum itself. In the middle of the flange portion 17 is a cable through hole 18 angled in the direction of thickness (vertical direction as viewed in FIGURE 2) to allow the parking cable to pass therethrough.

On one face of the flange portion 17 (upper face in FIGURE 2) is a guide portion 20 which is formed integrally with the flange portion 17. The guide portion 20 is of such dimensions and shape that the guide portion can pass through the connector through hole 12 provided in the backing plate 1. As is best illustrated in FIGURE 4, the upper edge of the guide portion 20 is provided with a guide groove 21 having a semi-circular arc cross section. By providing the parking cable within the guide groove 21, the parking cable having passed through the cable through hole 18, is directed in parallel with the backing plate 1 so that the parking cable can be operatively aligned with the parking lever 4 illustrated in FIGURE 10 (Prior Art).

In the case where an end face 22 of such guide portion 20 is placed in parallel with one face 23 of the flange portion 17 and the gap D between these two faces can be made substantially equal to the thickness T of the backing plate 1 (T = D) thereby causing the face 23 of the flange portion 17 to be in intimate contact with the other face of the backing plate 1. Likewise, the end face 22 of the guide portion 20 is constructed so that it comes in intimate contact with the other end of the backing plate 1. On the end face 22 is a screw hole 24 that allows the connector 16 to be secured to the backing plate 1 by a screw 25 inserted through a hole 26 provided in the backing plate 1 and screwed into the screw hole 24.

Reference numeral 19 designates a guide tube integrally formed with the flange portion 17 on the other face of the flange portion 17 (lower side as viewed in FIGURE 2). One end of the guide tube 19 (upper end as viewed in FIGURE 2) communicates with the cable through hole 18. Reference numeral 27 in FIGURES 2 and 4 designates a coil spring that is connected to an end of the guide groove 21 and covers the surface of the parking cable arranged between the guide groove 21 and the end of the parking lever 4. The coil spring 27 is provided to protect the parking cable.

In the parking cable connector for drum brakes according to the present invention, the parking brake is the same as in the conventional structure in which the cable guide and the connector are mounted on the backing plate separately. That is, the parking cable, one end of which is connected to the end of the parking lever 4, is caused to change its direction within the guide groove 21 formed on the guide portion 20 and is then guided out of the backing plate 1 from the cable through hole 18 arranged on the middle of the flange portion 17 through the guide tube 19.

However, the parking cable connector 16 for drun brakes according to the present invention, because it is a single component that is simply fitted on the backing plate 1, permits the parking cable to be pulled out of the backing plate 1, thereby simplifying the assembling operation and parts control when assembling the drum brake. That is, to mount the parking cable connector 16 on the backing plate 1, the guide portion 20 of the connector 16 is inserted into the connector through hole 12 arranged on the backing plate and the edge of the flange portion 17 of the connector 16 is adjusted so as to abut against the backing plate 1.

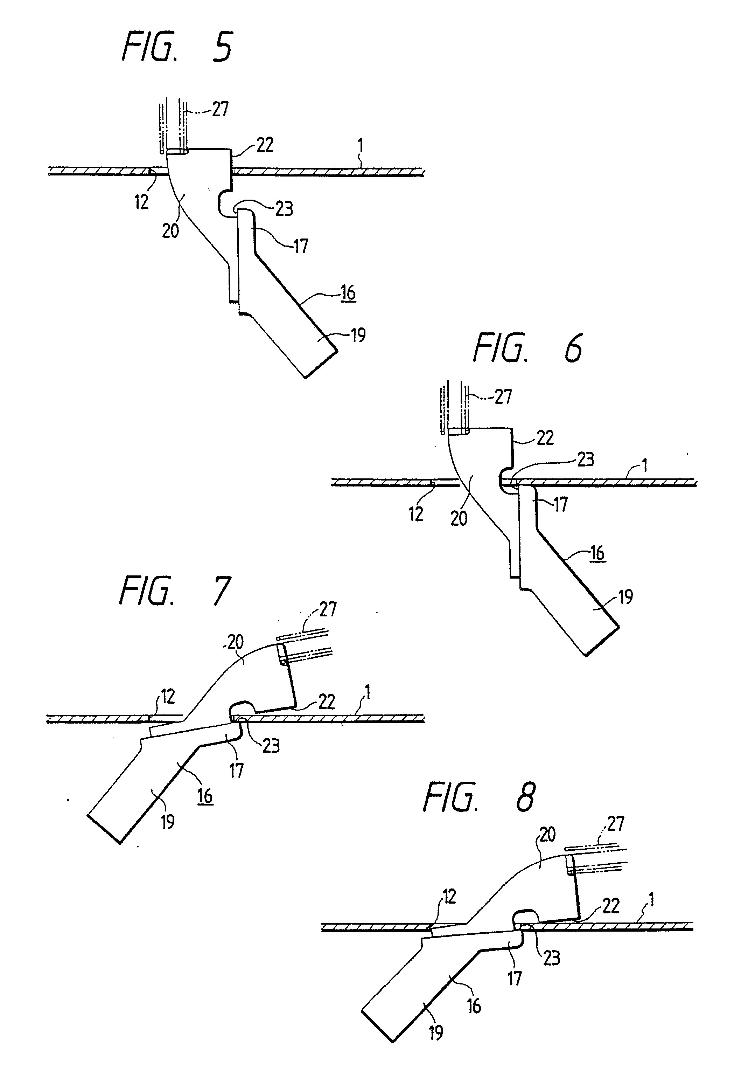

In order to cause the flange portion 17 to seat, the connector 16 is rotated as shown in FIGURES 7 and 8 to cause the face 23 of the flange portion 17 to come in intimate contact with one face of the backing plate 1 and cause the end face 22 of the guide portion 20 to come in intimate contact with the other end of the backing plate 1. With the backing plate 1 clamped by both faces 23, 22 in this way, the screw 25 inserted from outside the brake drum can enter the hole 26 provided in the backing plate 1, and the screw hole 24 provided in the end face of the guide portion 20 of the connector 16 thereby securing the connector 16 to the backing plate 1.

Such an operation of securing the connector can be performed easily and quickly.

## Claims

1. A parking cable connector for a drum brake assembly having a backing plate comprising:
a flange portion having a cable through hole for inserting a parking cable, the flange portion being of a size large enough to abut against a periphery of a connector through hole provided in the backing plate; and
a guide portion integrally formed with the flange portion, the guide portion being of a size large enough to be passable through the connector through hole and being capable of changing the direction of the parking cable once it has passed through the connector through hole.

2. A parking cable connector for drum brakes as in claim 1, wherein the connector is constructed of a synthetic resin.

3. A parking cable connector for drum brakes as in claim 1, wherein the connector is constructed of an aluminum metal.

4. A parking cable connector for drum brakes as in claim 1, wherein the connector is constructed of stainless steel.

5. A parking cable connector assembly comprising:
a drum brake assembly including a backing plate provided with a parking cable connector through hole; and a parking cable connector having a flange portion and a guide portion;
means for securing the parking cable connector to the backing plate.
the parking cable connector flange portion having a cable through hole for inserting a parking cable, the flange portion being of a size large enough to abut against a periphery of the connector through hole,
the guide portion being integrally formed with the flange portion and being of a size large enough to be passable through the connector through hole and being capable of changing the direction of the parking cable once it has passed through the connector through hole.

*FIG. 1*

*FIG. 2*

*FIG. 4*

*FIG. 3*

FIG. 5

FIG. 6

FIG. 7

FIG. 8

*FIG. 9* PRIOR ART

*FIG. 10* PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 041 492 (R.S. SANFORD) * Page 1, right-hand column, line 48 - page 2, left-hand column, line 5; figures 1,3 * | 1,5 | F 16 D 65/22 F 16 D 51/20 |
| A | US-A-2 163 879 (B.E. HOUSE) * Page 1, right-hand column, lines 14-32; figures 1,2,4 * | 1,5 | |
| A | PATENT ABSTRACTS OF JAPAN, vol. 7, no. 81 (M-205)[1226], 5th April 1983; & JP-A-58 8835 (NISSAN JIDOSHA K.K.) 19-01-1983 | 1,2,5 | |

TECHNICAL FIELDS SEARCHED (Int. Cl.5)

F 16 D 65/00
F 16 D 51/00
F 16 C 1/00

The present search report has been drawn up for all claims

| Place of search | Date of completion of the search | Examiner |
|---|---|---|
| THE HAGUE | 31-08-1990 | BRAEMS C.G.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)